(19) Europäisches Patentamt
European Patent Office
Office européen des brevets

(11) **EP 4 512 615 A1**

(12) **EUROPEAN PATENT APPLICATION**
published in accordance with Art. 153(4) EPC

(43) Date of publication:
**26.02.2025 Bulletin 2025/09**

(21) Application number: **23791941.0**

(22) Date of filing: **21.04.2023**

(51) International Patent Classification (IPC):
**B32B 27/00** (2006.01)    **B29C 45/14** (2006.01)
**B32B 27/32** (2006.01)

(52) Cooperative Patent Classification (CPC):
**B29C 45/14; B32B 27/00; B32B 27/32**

(86) International application number:
**PCT/JP2023/015876**

(87) International publication number:
**WO 2023/204293 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.04.2022 JP 2022070327**

(71) Applicant: **Sunallomer Ltd
Tokyo, 140-0002 (JP)**

(72) Inventors:
• **NAKAJIMA, Takeshi**
  **Kawasaki-shi, Kanagawa 210-0863 (JP)**
• **KATAGIRI, Akihiro**
  **Kawasaki-shi, Kanagawa 210-0863 (JP)**
• **KAMIMURA, Wakako**
  **Kawasaki-shi, Kanagawa 210-0863 (JP)**

(74) Representative: **Plasseraud IP
104 Rue de Richelieu
CS92104
75080 Paris Cedex 02 (FR)**

(54) **POLYMER MOLDED BODY COMPRISING BASE PART AND SURFACE LAYER PART**

(57) A polymer molded article including: a base portion; and a surface layer portion thermally bonded onto the base portion, wherein the polymer molded article satisfies the following requirements: 1) $Gs > Gb$ where $Gs$ is a rigidity of the surface layer portion, and $Gb$ is a rigidity of the base portion; and 2) $Tms < Tp$ where $Tms$ is a melting point of the surface layer portion at a joint portion with the base portion, and $Tp$ is a molding temperature during the thermally bonding.

Fig. 1

100

EP 4 512 615 A1

**Description**

TECHNICAL FIELD

The present invention relates to a polymer molded article including a base portion and a surface layer portion.

BACKGROUND ART

Replacement of metal materials with polymers has been studied in a wide range of technical fields including the automobile field. However, polymers have lower rigidity and scratch resistance than metal materials, and the replacement has not progressed in fields where these properties are required. In particular, in the food packaging field, it is required to reduce the thickness of the container, but the container whose thickness has been reduced is likely to cause defects such as buckling, and is difficult to put into practical use.

Meanwhile, there is known a technique for imparting a function by bonding a film to a surface of a molded article. For example, PTL 1 discloses a label for in-mold molding including a heat-sensitive adhesive layer on the back surface side of a biaxially oriented film. PTLs 2 and 3 disclose a technique for bonding a decorative film onto a resin molded article by thermoforming. Further, PTL 4 discloses a decorative laminated sheet including a surface layer, a design layer, and an adhesive layer containing a polymer having 85 mass% or more of propylene units in this order.

CITATION LIST

PATENT LITERATURE

PTL 1: Japanese Patent No. 3514867
PTL 2: Japanese Patent No. 6943044
PTL 3: Japanese Patent No. 6969176
PTL 4: Japanese Patent Application Publication No. 2014-124940

SUMMARY OF INVENTION

TECHNICAL PROBLEM

In the technique described in PTL 1, a heat-sensitive adhesive layer formed on the back surface side of a biaxially oriented film is used to bond the biaxially oriented film to a substrate. The heat-sensitive adhesive layer is a hot melt resin or the like and has low rigidity. Therefore, in the technique, it is difficult to improve the rigidity and scratch resistance of the substrate. Moreover, when the biaxially oriented film is thermally bonded, partial melting of the biaxially oriented film occurs, which causes defects such as deterioration of rigidity. In the techniques specifically described in PTLs 2 and 3, polypropylene is used as a substrate, and an un-oriented polypropylene-based resin is used as a decorative film. Therefore, even in the techniques, it is difficult to improve the rigidity and scratch resistance of the substrate. PTL 4 does not specifically disclose a polymer molded article in which a decorative laminated sheet is actually thermally bonded to a base portion. In view of such circumstances, an object of the present invention is to provide a polymer molded article excellent in rigidity and scratch resistance.

SOLUTION TO PROBLEM

The inventors have found that a molded article including a base portion and a specific surface layer portion thermally bonded onto the base portion can solve the above problems. Therefore, the above problems are solved by the following present invention.

Aspect 1.

A polymer molded article including:

a base portion; and
a surface layer portion thermally bonded onto the base portion, wherein
the polymer molded article satisfies the following requirements:

1)

$$Gs > Gb$$

where Gs is a rigidity of the surface layer portion, and Gb is a rigidity of the base portion; and
2)

$$Tms < Tp$$

where Tms is a melting point of the surface layer portion at a joint portion with the base portion, and Tp is a molding temperature during the thermally bonding.

Aspect 2.

The molded article according to aspect 1, wherein the base portion and the surface layer portion are formed of a polymer having the same repeating unit.

Aspect 3.

The molded article according to aspect 1 or 2, wherein the surface layer portion has a multilayer structure.

Aspect 4.

The molded article according to aspect 3, wherein

the surface layer portion has a multilayer structure including a biaxially oriented sheet layer L having a melting point Tml and a biaxially oriented sheet layer H having a melting point Tmh,

$$Tmh > Tml,$$

and
the biaxially oriented sheet layer L forms the joint surface.

Aspect 5.

The molded article according to aspect 4, wherein

the biaxially oriented sheet layer H is formed of
a polypropylene-based resin (A), or
a resin composition containing the polypropylene-based resin (A) and a plate-like inorganic filler (B), in which a weight ratio of a component (B)/[a component (A) + the component (B)] is more than 0 wt% and 60 wt% or less.

Aspect 6.

The molded article according to aspect 5, wherein

the polypropylene-based resin (A) contains a polypropylene-based resin consisting of a component (A1) and an optional component (A2),
the component (A1) is 100 to 50 wt% of a propylene (co)polymer containing 0 to 10 wt% of a comonomer-derived unit selected from C2 to C10 $\alpha$-olefins (excluding C3 $\alpha$-olefins),
the optional component (A2) is 0 to 50 wt% of an ethylene-$\alpha$-olefin copolymer containing 10 to 90 wt% of an ethylene-derived unit, and
the polypropylene-based resin (A) has MFR (230°C, load 2.16 kg) of 1 to 15 g/10 min.

Aspect 7.

The molded article according to any one of aspects 4 to 6, wherein the surface layer portion includes a top layer other than the biaxially oriented sheet layer L and the biaxially oriented sheet layer H on an outermost surface of the surface layer portion.

Aspect 8.

The molded article according to any one of aspects 4 to 7, wherein a total thickness of the biaxially oriented sheet layer L/a thickness of the surface layer portion is 1 to 50%.

Aspect 9.

The molded article according to any one of aspects 4 to 8, wherein the surface layer portion has an alternating layer including the biaxially oriented sheet layer L and the biaxially oriented sheet layer H alternately laminated.

Aspect 10.

The molded article according to any one of aspects 1 to 9, wherein the surface layer portion has a thickness of 30 $\mu$m or more.

Aspect 11.

The molded article according to any one of aspects 1 to 10, wherein the base portion has a thickness of 5 to 250 times a thickness of the surface layer portion.

Aspect 12.

A process for producing the molded article according to any one of aspects 1 to 11, including:

a step 1 of preparing the surface layer portion; and
a step 2 of subjecting a raw material of the base portion to thermoforming to thereby form the base portion, and thermally bonding the surface layer portion to a surface of the base portion.

Aspect 13.

The process according to aspect 12, wherein the step 2 includes:

a step of disposing the surface layer portion in a cavity of a mold; and
a step of subjecting a raw material of the base portion to injection molding in the cavity to thereby form the base portion, and thermally bonding the surface layer portion to a surface of the base portion.

ADVANTAGEOUS EFFECTS OF INVENTION

According to the present invention, a polymer molded article excellent in rigidity and scratch resistance can be provided.

BRIEF DESCRIPTION OF DRAWINGS

Fig. 1 is a view illustrating an outline of one aspect of a polymer molded article.
Fig. 2 is a view illustrating an outline of another aspect of the polymer molded article.
Fig. 3A is a view illustrating an outline of one aspect of a surface layer portion.
Fig. 3B is a view illustrating an outline of another aspect of the surface layer portion.
Fig. 4 is a view illustrating an outline of one aspect of a process for producing a surface layer portion.
Fig. 5 is a view illustrating an outline of another aspect of the process for producing a surface layer portion.
Fig. 6 is a view illustrating an outline of one aspect of a process for producing a polymer molded article.
Fig. 7 is a view for explaining sections for measuring a residual ratio R.

DESCRIPTION OF EMBODIMENTS

Hereinafter, the present invention will be described in detail. In the present invention, "X to Y" includes its end values, that is, X and Y. In the present invention, a sheet and a film are used synonymously, and in particular, a film-like part having a thickness of 150 $\mu$m or more may be referred to as a sheet, and a film-like part having a thickness of less than 150 $\mu$m may be referred to as a film. In addition, the sheet and the film may be collectively referred to as "sheet-like part".

1. Polymer molded article

The polymer molded article according to the present embodiment includes a base portion and a surface layer portion thermally bonded onto the base portion. That is, the base portion and the surface layer portion are fusion bonded. The base portion is a part constituting a base of the polymer molded article. The surface layer portion is formed on the base portion and imparts a function to the molded article. Examples of the function include improvement of rigidity or improvement of scratch resistance.

(1) Base portion and surface layer portion

The base portion and the surface layer portion satisfy a relationship of Gs > Gb. Gs is the rigidity of the surface layer portion, and Gb is the rigidity of the base portion. The rigidity is measured by a known method. For example, the rigidity is preferably a flexural modulus measured by a flexural test (JIS K6921-2) or a tensile modulus measured by a tensile test (JIS K7161). The surface layer portion may have a single-layer structure or a multilayer structure. In a case where the surface layer portion has a multilayer structure, Gs means rigidity as a whole layer. The same applies to the base portion. The properties of the base portion and the surface layer portion of the polymer molded article do not change before and after being bonded. Therefore, the rigidities of the surface layer portion and the base portion before being bonded may be Gs and Gb, respectively. As described later, the base portion can be thermally bonded to the surface layer portion by injection molding such as insert molding. In this case, the rigidity of the base portion that is formed by thermoforming alone without being thermally bonded with the surface layer portion may be taken as Gb.

The polymer molded article has a rigidity of preferably 1400 MPa or more, more preferably 1500 MPa or more, even more preferably 1600 MPa or more, still even more preferably 1800 MPa or more, and particularly preferably 2000 MPa or more at 23°C regardless of the direction. The polymer molded article has a rigidity of preferably 300 MPa or more, and more preferably 500 MPa or more at 100°C regardless of the direction. The upper limit of the rigidity of the polymer molded article is not limited, but is 5000 MPa or less at 23°C and 2000 MPa or less at 100°C regardless of the direction.

Gs and Gb are set so that this rigidity can be achieved. In one aspect, Gs and Gb are the following regardless of the direction.

At 23°C, the lower limit of Gs is preferably 2000 MPa or more, more preferably 2200 MPa or more, and even more preferably 2500 MPa or more. The upper limit of Gs is preferably 7000 MPa or less, and more preferably 6000 MPa or less. At 100°C, the lower limit of Gs is preferably 500 MPa or more, more preferably 1000 MPa or more, and the upper limit is preferably 3000 MPa or less, more preferably 2000 MPa or less.

At 23°C, the lower limit of Gb is preferably 1000 MPa or more, more preferably 1500 MPa or more, and the upper limit is preferably 5000 MPa or less, more preferably 3000 MPa or less. At 100°C, the lower limit of Gb is preferably 200 MPa or more, more preferably 300 MPa or more, and the upper limit is preferably 2000 MPa or less, more preferably 1500 MPa or less.

The base portion and the surface layer portion satisfy a relationship of Tms < Tp. Tms is a melting point at a joint portion of the surface layer portion with the base portion, and Tp is a molding temperature during the thermally bonding. By satisfying the relationship of Tms < Tp, the surface layer portion and the base portion can be thermally bonded. When the surface layer portion has a multilayer structure, Tms is a melting point of a layer representing the joint portion with the base portion. In one aspect, the layer representing the joint portion refers to a layer having the highest melting point among the plurality of layers or a layer having the highest weight ratio among the plurality of layers. The melting point is measured by known thermal analysis. The melting point is preferably measured using, for example, DSC. At this time, it is preferable to perform the measurement under the condition of a heating rate of 10°C/min from 30°C to 230°C. Similarly to the above-described rigidity, the melting point of the surface layer portion before being bonded may be taken as Tms.

The state of the surface layer portion may vary before and after thermally bonding. The residual ratio is used as an index of how much the surface layer portion maintains its original state. The residual ratio will be described later in detail.

Tp is a molding temperature during the thermally bonding. When the base portion and the surface layer portion are thermally bonded by press molding, vacuum forming, or the like, Tp is the temperature of the base portion at the time of molding. When the base portion and the surface layer portion are thermally bonded by injection molding, that is, when the base portion and the surface layer portion are thermally bonded by insert molding, Tp is the temperature of the molten polymer for the base portion, which is discharged from the nozzle of the molding machine. Tp can be measured using a thermocouple, infrared rays, or the like.

The thickness of the surface layer portion is not limited, but when the surface layer portion is excessively thin, rigidity and impact resistance tend to be insufficient, and when the surface layer portion is excessively thick, production becomes difficult. From such a viewpoint, the lower limit of the thickness is preferably 30 $\mu$m or more, more preferably 80 $\mu$m or more, and even more preferably 100 $\mu$m or more. The upper limit of the thickness is preferably 500 $\mu$m or less, more preferably 400 $\mu$m or less, and even more preferably 300 $\mu$m or less.

The thickness of the base portion is appropriately adjusted depending on the application, and is preferably 5 to 250 times and more preferably 10 to 100 times the thickness of the surface layer portion from the viewpoint of ease of production and the like.

In one aspect, the thickness of the polymer molded article is preferably 0.1 to 5 mm, more preferably 1 to 4 mm, and even more preferably 1.5 to 3.5 mm. In the present invention, the thickness is defined as an average value of the thickness of the part.

Although it is generally difficult to quantify the adhesive strength between the surface layer portion and the base portion that are thermally bonded, the peeling strength can be used as an index in one aspect. The peeling strength is preferably 7 N/15 mm, more **preferably** 10 N/15 mm, and even more preferably 100 N/15 mm or more. The peeling strength is determined by a 180-degree peeling test at 23°C using a strip-shaped test piece having a width of 15 mm. The upper limit of the peeling strength is not limited, but is preferably 200 N/15 mm or less. In one aspect, the distance between chucks is 50 mm, the moving speed of the chucks is 300 mm/min, the tensile length is 100 mm, and the average value of the test forces in the stable section 50 mm during material failure is used as the test value.

The base portion and the surface layer portion may be formed of any polymer. However, in consideration of affinity between both portions, the base portion and the surface layer portion are preferably formed of the same type of polymer, and more preferably formed of a polymer having the same repeating unit. Such a polymer includes polyolefins, engineering plastics, and super engineering plastics. Examples of the polyolefin include polypropylene and polyethylene. Examples of the engineering plastic include polyesters such as PET. Examples of the super engineering plastic include polyether sulfone and polyether ether ketone, or the like.

(2) Preferred first aspect

The surface layer portion is preferably formed of an oriented sheet-like part. The stretching may be uniaxial stretching or multiaxial stretching, and is preferably biaxial stretching. In this case, the surface layer portion preferably has a multilayer structure including a biaxially oriented sheet layer L having a melting point Tml and a biaxially oriented sheet layer H having a melting point Tmh. Note that Tmh > Tml. The biaxially oriented sheet layer L is preferably in contact with the base portion.

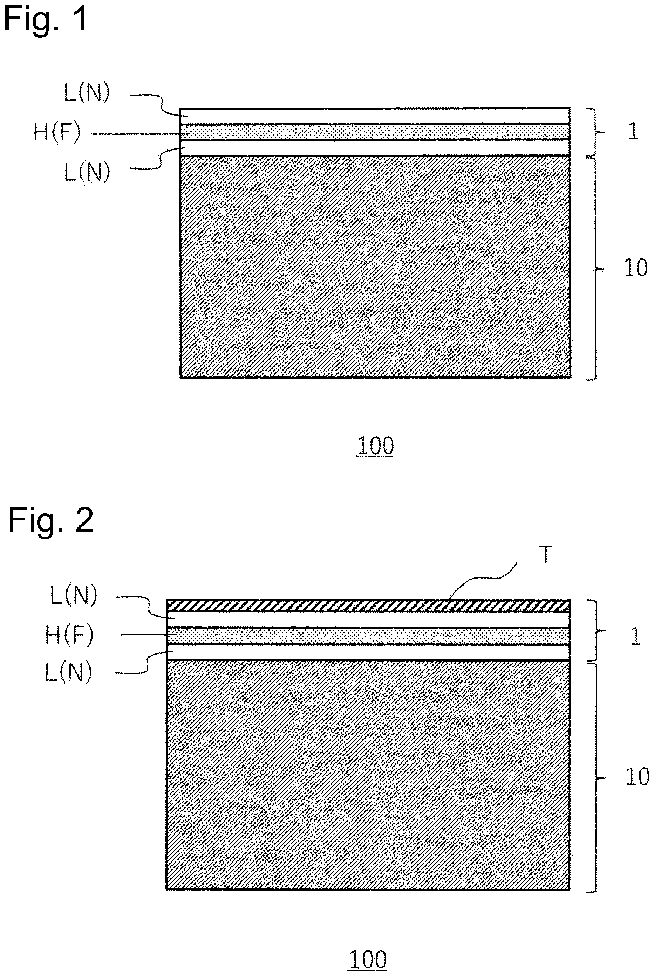

This aspect is illustrated in Fig. 1. In the drawing, the reference alphanumeric 1 denotes a surface layer portion, the reference alphanumeric 10 denotes a base portion, and the reference alphanumeric 100 denotes a polymer molded article. In the drawing, H denotes a biaxially oriented sheet layer H, and L denotes a biaxially oriented sheet layer L. As described above, the surface layer portion preferably includes an alternating layer including the biaxially oriented sheet layers H and the biaxially oriented sheet layers L alternately laminated. In this case, the layer L is preferably a joint surface with the base portion. The respective layers of the surface layer portion 1 are fusion bonded and integrated. This can be confirmed by cross-sectional observation with a polarizing microscope as described in WO 2020/075755.

1) Surface layer portion

[Multilayer structure]

At least a part of all the layers of the surface layer portion 1 may be composed of coextruded layers which are obtained by coextrusion, and in which the biaxially oriented sheet layers H and the biaxially oriented sheet layers L are alternately laminated. The production process will be described later.

The total number of layers of the surface layer portion 1 is preferably 2 to 50. When the total number of layers is within this range, excellent moldability is exhibited. In an aspect in which the surface layer portion 1 includes coextruded layers, the thickness of the coextruded layer is preferably 0.04 to 0.50 mm. The total number of coextruded layers is preferably 1 to 6, and more preferably 1 to 3.

The total thickness (sum of the thicknesses) of the biaxially oriented sheet layer L in the thickness of the surface layer portion 1 is not particularly limited, but is preferably 2 to 120 $\mu$m, more preferably 5 to 60 $\mu$m, and even more preferably 10 to 30 $\mu$m from the viewpoint of ease of production, cost, and the like. The thickness of each layer may be the same or different. When the ratio of the total thickness of the layer L to the thickness of the surface layer portion (the total thickness of the layer L/the thickness of the surface layer portion) is excessively small, the fusion bonding properties between the layers of the multilayer sheet become insufficient, and when the ratio is excessively large, the rigidity of the multilayer sheet becomes insufficient. The ratio of the total thickness of the layer L to the thickness of the surface layer portion is preferably 1 to 50% from the viewpoint of the balance between fusion bonding properties and rigidity. Then, the thickness of each layer is appropriately adjusted so as to achieve the above ratio. The thickness per layer of the biaxially oriented sheet layer H is preferably 20 to 300 μm. The thickness per layer of the biaxially oriented sheet layer L is preferably 2 to 40 μm. However, as will be described later, the surface layer portion 1 may be formed by preparing a plurality of multilayer sheets including the biaxially oriented sheet layers L, disposing the biaxially oriented sheet layers L so as to be in contact with each other, and thermally fusion bonding the layers. In this case, the thickness per layer of the biaxially oriented sheet layer L in the surface layer portion 1 is 4 to 80 μm.

The value Tmh - Tml is not limited, but is preferably 1°C or higher, more preferably 10°C or higher, and even more preferably 25°C or higher. The value Tmh - Tml is preferably 60°C or lower. When the melting points of Tmh and Tml are excessively low, the rigidity and heat resistance of the surface layer portion 1 are insufficient. From this viewpoint, the melting point Tmh is preferably 160°C or higher, more preferably 165°C or higher, and the melting point Tml is preferably 100°C or higher, more preferably 120°C or higher, and even more preferably 130°C or higher. These melting points can be measured by DSC under the condition of a heating rate of 10°C/min from 30°C to 230°C.

A functional group can be imparted to the layer constituting the surface layer portion 1. It is preferable to impart a functional group to the outermost layer constituting the surface layer portion 1. As the functional group, an oxygen-containing functional group is preferred. Examples of the oxygen-containing functional group include a carboxyl group, a carboxylate group, an acid anhydride group, a hydroxy group, an aldehyde group, and an epoxy group, or the like. These functional groups improve adhesion between the surface layer portion 1 and other materials.

[Top layer]

The surface layer portion 1 may include a top layer other than the biaxially oriented sheet layers L and H on the outermost surface thereof. This aspect is illustrated in Fig. 2. In the drawing, T denotes the top layer. The top layer is provided, for example, for imparting designability and the like. The top layer is preferably a coating film used for coating vehicle bodies. Examples of such a coating film include epoxy-based coating films, urethane-based coating films, and polyester-based coating films. A lower layer coating film (primer coating film), a middle layer coating film, or an upper layer coating film (clear coating film) may be provided as necessary. In the case where the multilayer sheet is used as a sheet to be coated (coating sheet), the surface to be coated preferably has a functional group.

[Polymer constituting biaxially oriented sheet layer H]

The biaxially oriented sheet layer H is preferably formed of a polypropylene-based resin (A) from the viewpoint of providing a surface layer portion excellent in rigidity and scratch resistance. The polypropylene-based resin (A) consists of 100 to 50 wt% of a component (A1) and 0 to 50 wt% of an optional component (A2). When the component (A2) is more than 0 wt%, the component (A) may be a so-called heterophasic copolymer (HECO) obtained by polymerizing the component (A1) and polymerizing the component (A2) in the presence of the component (A1), or may be a blend of the component (A1) and the component (A2), which are separately prepared by polymerization. However, the component (A) is preferably HECO in that the component (A) can be obtained by fewer production processes.

The component (A1) is a propylene (co)polymer containing 0 to 10 wt% of a comonomer-derived unit selected from C2 to C10 α-olefins (excluding C3 α-olefins). The comonomers selected from C2 to C10 α-olefins naturally contain no C3 α-olefins. When the component (A1) contains a comonomer, ethylene is preferable from the viewpoint of economic efficiency. When the amount of the comonomer-derived unit exceeds the upper limit, the rigidity of the surface layer portion may be reduced. From this viewpoint, it is preferable that the component (A1) contains no comonomer-derived unit, that is, the component (A1) be a propylene homopolymer. Alternatively, when the component (A1) contains a comonomer-derived unit, the amount thereof is preferably more than 0 wt% and 1 wt% or less.

In the polypropylene-based resin, the content of the component (A1) is 50 to 100 wt%. When the content of the component (A1) is small, the production of the polypropylene-based resin may be difficult, or the rigidity of the surface layer portion may be reduced. Thus, the content of the component (A1) is preferably 60 to 100 wt%, and more preferably 70 to 100 wt%.

The melt flow rate (MFR) (230°C, load 2.16 kg) of the polypropylene-based resin (A) is 1 to 15 g/10 min. When the MFR exceeds the upper limit, it becomes difficult to prepare a biaxially oriented polypropylene sheet-like part as a raw material of the surface layer portion, and when the MFR is less than the lower limit, the productivity of the polypropylene-based resin (A) is reduced. From this viewpoint, the lower limit of the MFR is preferably 2 g/10 min or more, and more preferably 3 g/10 min or more, and the upper limit thereof is preferably 10 g/10 min or less and more preferably 8 g/10 min or less.

The optional component (A2) is an ethylene-α-olefin copolymer containing 10 to 90 wt% of an ethylene-derived unit. When the ethylene-derived unit is less than the lower limit or more than the upper limit, the cold impact resistance is reduced. From this viewpoint, the content of the ethylene-derived unit is preferably 15 to 85 wt%, and more preferably 20 to 80 wt%. The $\alpha$-olefin is not limited as long as it is other than ethylene, but is preferably propylene, 1-butene, 1-hexene, or 1-octene, more preferably propylene or 1-butene, and even more preferably propylene.

In the polypropylene-based resin (A), the content of the component (A2) is 0 to 50 wt%. When the content of the component (A2) is excessively large, the productivity of the polypropylene-based resin (A) is reduced. Thus, the content of the component (A2) is preferably 0 to 40 wt%, and more preferably 0 to 30 wt%.

The polypropylene-based resin (A) may be a propylene random copolymer (RACO) containing 0 to 5 wt% of a comonomer-derived unit selected from C2 to C10 $\alpha$-olefins (excluding C3 $\alpha$-olefins).

The biaxially oriented sheet layer H may be formed of a resin composition containing a nucleating agent. The nucleating agent refers to an additive (nucleating agent for transparency) used for controlling the size of crystalline components in resin to be small to thereby enhance transparency. Therefore, the transparency of the biaxially oriented sheet layer H is improved by containing a nucleating agent. From the economic viewpoint, the amount of the nucleating agent is preferably 0.5 parts by weight or less, more preferably 0.2 parts by weight or less, and even more preferably 0.1 parts by weight or less, based on 100 parts by weight of the polymer that forms the biaxially oriented sheet layer H. The nucleating agent is not particularly limited, and one typically used in this field can be used. The nucleating agent is preferably selected from nonitol-based nucleating agents, sorbitol-based nucleating agents, phosphate ester-based nucleating agents, triaminobenzene derivative nucleating agents, metal carboxylate nucleating agents, and xylitol-based nucleating agents.

[Polymer constituting biaxially oriented sheet layer L]

The biaxially oriented sheet layer L is preferably formed of a propylene random copolymer (RACO) containing 10 wt% or less of at least one comonomer selected from C2 to C10 $\alpha$-olefins (excluding C3 $\alpha$-olefins) or a resin composition containing the RACO. When the comonomer content in RACO is excessively small, fusion bonding properties with the base portion or fusion bonding properties with other layers in a case where the surface layer portion is formed of a plurality of layers may be insufficient. When the comonomer content is excessively large, the rigidity of the multilayer sheet may be reduced. From this viewpoint, the comonomer content is preferably more than 0 wt% and 4.5 wt% or less. The comonomer is preferably ethylene (C2 $\alpha$-olefin). The MFR (230°C, load 2.16 kg) of the polymer or the resin composition constituting the biaxially oriented sheet layer L is not limited, but is preferably 1 to 15 g/10 min, more preferably 2 to 10 g/10 min, and even more preferably 3 to 8 g/10 min.

The biaxially oriented sheet layer L may be formed of a resin composition containing a nucleating agent, or may be formed of a resin composition or polymer containing no nucleating agent. When the biaxially oriented sheet layer L contains a nucleating agent, the amount of the nucleating agent is preferably 1 part by weight or less, based on 100 parts by weight of the polymer that forms the biaxially oriented sheet layer L, from the economic viewpoint.

[Additive]

The resin composition constituting the above layers may further contain commonly used additives that are normally used for polyolefins, such as antioxidants, chlorine absorbers, heat-resistant stabilizers, light stabilizers, ultraviolet absorbers, internal lubricants, external lubricants, anti-blocking agents, anti-static agents, anti-fogging agents, flame retardants, dispersants, copper corrosion inhibitors, neutralizing agents, plasticizers, crosslinking agents, peroxides, extension oils, and other organic and inorganic pigments. The amount of the additive to be added may be a publicly known amount. Further, the resin composition may also contain synthetic resins or synthetic rubbers other than polypropylene, as long as the effect of the present invention is not impaired. One type of synthetic resin or synthetic rubber may be used, or two or more types thereof may be used.

2) Base portion

The base portion is formed of the polymer described above, but is preferably formed of the same type of polymer as the surface layer portion, more preferably formed of a polymer having the same repeating unit, and more preferably formed of a polypropylene-based resin.

(3) Preferred second aspect

In this aspect, the biaxially oriented sheet layer H is formed of a resin composition containing a polypropylene-based resin (A) and a plate-like inorganic filler (B), wherein the weight ratio of the component (B)/[the component (A) + the component (B)] is more than 0 wt% and 60 wt% or less.

[Multilayer structure]

The surface layer portion in this aspect preferably has a multilayer structure including the biaxially oriented sheet layers H and the biaxially oriented sheet layers L alternately laminated. Hereinafter, in this aspect, the biaxially oriented sheet layer H is also referred to as a "filler layer F", and the biaxially oriented sheet layer L is also referred to as a "neat layer N". Since the respective layers are fusion bonded, the surface layer portion is integrated.

This aspect is illustrated in Fig. 1. In the drawing, the reference alphanumeric 1 denotes a surface layer portion, the reference alphanumeric 10 denotes a base portion, the reference alphanumeric F denotes a filler layer F, and the reference alphanumeric N denotes a neat layer N. The filler layer F and the neat layer N respectively correspond to the biaxially oriented sheet layer H and the biaxially oriented sheet layer L in the first aspect described above.

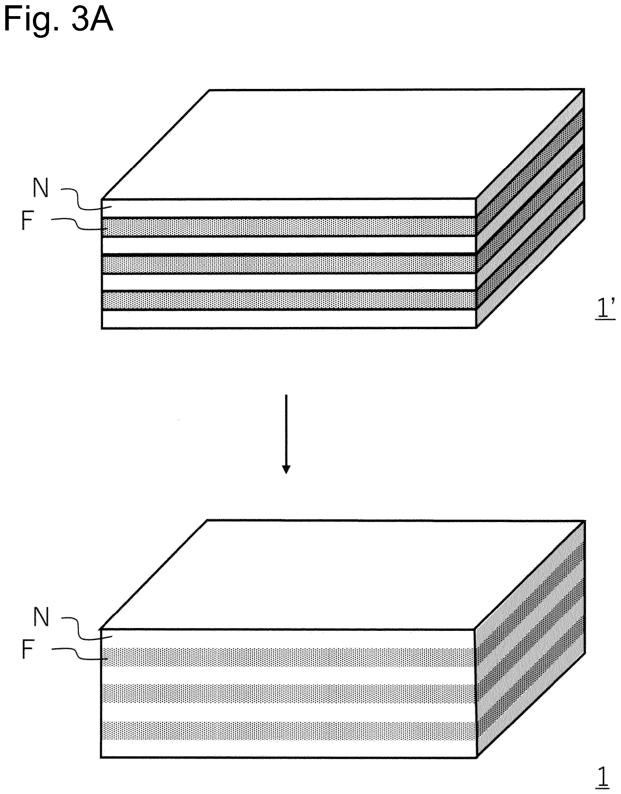

As described later, the filler layer F in the surface layer portion is derived from a polypropylene biaxially oriented sheet-like part for the filler layer F, and the neat layer N is derived from a biaxially oriented polypropylene sheet-like part for the neat layer N. Each layer may be independently formed of the sheet-like part. Details of the surface layer portion are illustrated in Fig. 3A. In the drawing, the reference alphanumeric 1' denotes a precursor described later. The layers of a precursor 1' are fusion bonded to form the surface layer portion 1.

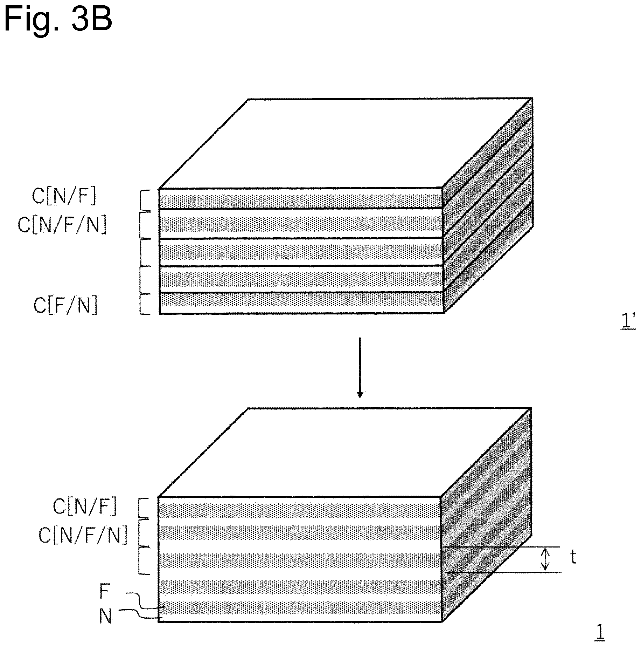

At least a part of all the layers may be composed of coextruded layers which are obtained by coextrusion, and in which the filler layers F and the neat layers N are alternately laminated. This aspect is illustrated in Fig. 3B. In the drawing, the reference alphanumeric C denotes a coextruded layer, and for example, C [N/F] denotes a coextruded layer having two layers of the neat layer N and the filler layer F. The surface layer portion 1 is formed from the precursor 1' having three coextruded layers of C[N/F/N] between coextruded layers C[F/N] and C[N/F]. The thickness of each C may be the same or different. In addition, the thicknesses of the layers constituting each C may be the same or different.

The total number of layers in the surface layer portion is 2 to 50. When the total number of layers is within this range, excellent moldability is exhibited. In the aspect of Fig. 3B, the total number of layers in the surface layer portion is 11. In an aspect including coextruded layers, the thickness of the coextruded layer is preferably 0.04 to 0.50 mm. The total number of coextruded layers is preferably 2 to 6, more preferably 2 to 5, even more preferably 2 to 4, and particularly preferably 2 to 3. The thickness of the coextruded layer refers to the thickness of the entire coextruded layer C (denoted by t in Fig. 3B). In the case of Fig. 3B, the total number of coextruded layers is 5.

Regarding the value of the ratio DF/DN, wherein the DF is the total thickness (sum of the thicknesses) of the filler layers F and the DN is the total thickness (sum of the thicknesses) of the neat layers N, when the value is excessively small, the rigidity of the surface layer portion is insufficient, and when the value is excessively large, the fusion bonding properties between the surface layer portion and the base portion and the fusion bonding properties between the layers of the surface layer portion are insufficient. For the balance between fusion bonding properties and rigidity, the ratio DF/DN is preferably 1 to 30, more preferably 1 to 25, and even more preferably 4 to 15. The thickness of each layer may be the same or different. The thickness of each layer is appropriately adjusted so that the ratio falls within the above range. The thickness of one layer of the filler layer F is preferably 50 $\mu$m to 200 $\mu$m. The thickness of one layer of the neat layer N is preferably 5 $\mu$m to 40 $\mu$mm.

The melting point TmF of the filler layer F and the melting point TmN of the neat layer N satisfy the relationship TmF > TmN. That is, Tmh in the first aspect corresponds to TmF, and Tml in the first aspect corresponds to TmN. The value TmF - TmN is not limited, but is preferably 1°C or higher, more preferably 10°C or higher, and even more preferably 25°C or higher. The value TmF - TmN is preferably 60°C or lower. When these melting points are excessively low, the rigidity and heat resistance of the multilayer sheet are insufficient. From this viewpoint, the melting point TmF is preferably 160°C or higher, more preferably 165°C or higher, and the melting point TmN is preferably 100°C or higher, more preferably 120°C or higher, and even more preferably 130°C or higher. These melting points can be measured by DSC under the condition of a heating rate of 10°C/min from 30°C to 230°C.

[Resin composition constituting filler layer F]

The filler layer F is formed of a resin composition containing a component polypropylene-based resin (A) and an inorganic filler (B). The polypropylene-based resin (A) is as described above.

The inorganic filler (B) is added mainly for improving the rigidity of the material. Examples of the inorganic filler include the following materials from the viewpoint of the substance:
natural silicic acid or silicate such as talc, kaolinite, clay, pyrophyllite, selenite, wollastonite, and mica; synthetic silicic acid or silicate such as hydrous calcium silicate, hydrous aluminum silicate, hydrous silicic acid, and anhydrous silicic acid; a carbonate such as precipitated calcium carbonate, heavy calcium carbonate, and magnesium carbonate; a hydroxide such as aluminum hydroxide and magnesium hydroxide; and an oxide such as zinc oxide and magnesium oxide.

In addition, examples of the inorganic filler include the following materials from the viewpoint of the shape:
a powder filler including synthetic silicic acid, silicate and the like, such as hydrous calcium silicate, hydrous aluminum silicate, hydrous silicic acid, and anhydrous silicic acid; a plate-like filler such as talc, kaolinite, clay, and mica; a whisker-like filler such as basic magnesium sulfate whisker, calcium titanate whisker, aluminum borate whisker, sepiolite, processed mineral filler (PMF), xonotlite, potassium titanate, and elastite; a balloon-like filler such as glass balloon and fly ash balloon; and a fibrous filler such as glass fiber.

One type of the inorganic filler may be used, or two or more types thereof may be used in combination. In order to improve the dispersibility of these fillers, the surface treatment of the inorganic filler may be performed as necessary. The inorganic filler used in the present invention is not limited, but a plate-like inorganic filler is preferable from the viewpoint of enhancing rigidity and impact resistance by promoting the orientation of the polypropylene crystal in the filler layer F in the direction along the sheet surface. As the plate-like inorganic filler, a known material such as talc, kaolinite, clay, and mica can be used, but in consideration of affinity with the polypropylene-based resin, ease of procurement as a raw material, economic efficiency, and the like, talc and mica are preferable, and talc is more preferable. The volume average particle size of the plate-like inorganic filler is preferably 1 to 10 $\mu$m, and more preferably 2 to 7 $\mu$m. When the volume average particle size is less than the lower limit, the rigidity of the filler layer F may be reduced. When the volume average particle size exceeds the upper limit, breakage tends to occur during stretching, thus making it difficult to prepare a biaxially oriented sheet-like part as a raw material of the multilayer sheet. The volume average particle size can be measured as a 50% diameter in a volume-based integrated fraction by a laser diffraction method (based on JIS R1629).

[Weight ratio between component (A) and component (B)]

The weight ratio between the component (A) and the component (B) in the filler layer F is as follows.

Component (B)/[component (A) + component (B)] = more than 0 wt% and 60 wt% or less

When the amount of the component (B) is small, the rigidity of the multilayer sheet is insufficient, and when the amount of the component (B) is large, it may be difficult to produce the multilayer sheet. From this viewpoint, the weight ratio is preferably 5 to 55 wt%, more preferably 10 to 55 wt%, and even more preferably 20 to 55 wt%.

[Polymer or resin composition constituting neat layer N]

The neat layer N is formed of a resin composition containing a polypropylene-based resin as a component (A) and the component (B) as an optional component. The component (A) here is selected so as to satisfy the relationship between TmF and TmN. The component (A) is preferably selected from a propylene homopolymer (HOMO) or a propylene random copolymer (RACO) containing 5 wt% or less of at least one comonomer selected from C2 to C10 $\alpha$-olefins (excluding C3 $\alpha$-olefins), or a combination of these HOMO and RACO. When the amount of the comonomer-derived unit is excessively small, the fusion bonding properties with the base portion and the filler layer F may be insufficient, and when the amount of the comonomer-derived unit is excessively large, the rigidity of the multilayer sheet may be reduced. From this viewpoint, the amount of the comonomer-derived unit is preferably more than 0 wt% and 10 wt% or less. The comonomer is preferably ethylene (C2 $\alpha$-olefin).

The MFR (230°C, load 2.16 kg) of the polymer or resin composition constituting the neat layer N is preferably 1 to 15 g/10 min, more preferably 2 to 10 g/10 min, and even more preferably 3 to 8 g/10 min. When the MFR is excessively small, the productivity of the polypropylene-based resin as a raw material is reduced, and when the MFR is excessively large, breakage occurs during biaxial stretching, and the multilayer sheet as a raw material of the surface layer portion may not be stably produced.

[Weight ratio between component (A) and component (B)]

The weight ratio between the component (A) and the component (B) in the neat layer N is as follows.

$$\text{Component (B)/[component (A) + component (B)]} = 0 \text{ to } 10 \text{ wt\%}$$

In particular, in the case of including a process of preparing an original sheet by coextrusion in the production of the multilayer sheet, when the amount of the component (B) in the original sheet N" (corresponding to the neat layer N of the multilayer sheet) is large, the strength of the original sheet may be reduced. Thus, the weight ratio is preferably 8 wt% or less. The weight ratio is more preferably 5 wt% or less, even more preferably 1 wt% or less, particularly preferably 0.5 wt% or less, and most preferably 0 wt%. Note that the weight ratio in the neat layer N is smaller than the weight ratio in the filler layer F.

The filler layer F and the neat layer N may contain the above-described nucleating agent or additive.

(4) Residual ratio

As described above, the residual ratio is an index of how much the surface layer portion maintains its original state before and after thermally bonding. The residual ratio is measured by a known analysis method such as DSC, X-ray diffraction, or a density method. For example, when DSC is used, the residual ratio can be represented by an area ratio between an area of melted component in a DSC chart obtained from a portion in contact with the base portion and an area of melted component obtained from a portion not in contact with the base portion.

For example, the residual ratio R for the higher-order structure is defined by $\Delta Hin/\Delta Hout$.

$\Delta Hout$ is a heat content obtained by DSC analysis of a portion in the vicinity of the surface of the surface layer portion in the polymer molded article. $\Delta Hout$ is an index of the state of the higher-order structure before thermally bonding. Specifically, $\Delta Hout$ is measured by the following means.

　　1) A portion 10 to 50% thickness from a surface of the surface layer portion on a side opposite to the base portion is collected.

　　2) The collected sample is subjected to DSC analysis under a heating condition, and the heat content (J/g) in the range of the melting point $\pm$ 5°C in the melting profile is defined as $\Delta Hout$. The heat content (J/g) in the range of Tmh $\pm$ 5°C is typically defined as $\Delta Hout$ in the cases including a case where the surface layer portion is composed of the biaxially oriented sheet layer L and the biaxially oriented sheet layer H as described above. The melting point is the peak top temperature in the melting profile.

$\Delta Hin$ is a heat content obtained by DSC analysis of a portion in the vicinity of the interface of the surface layer portion in the polymer molded article. $\Delta Hin$ is an index of the state of the higher-order structure after thermally bonding. Specifically, $\Delta Hin$ is measured by the following means.

　　1) A portion 10 to 50% thickness from an interface between the surface layer portion and the base portion is collected.

　　2) The collected sample is subjected to DSC analysis under a heating condition, and the heat content (J/g) in the range of the melting point $\pm$ 5°C in the melting profile is defined as $\Delta Hin$. The heat content (J/g) in the range of Tmh $\pm$ 5°C is typically defined as $\Delta Hin$ in the cases including a case where the surface layer portion is composed of the biaxially oriented sheet layer L and the biaxially oriented sheet layer H as described above.

As the value of R ($\Delta Hin/\Delta Hout$) is larger, the higher-order structure of the surface layer portion is maintained even after thermally bonding. The value of the residual ratio is not limited, but is preferably 60 to 100%, and the lower limit thereof is more preferably 70% or more, 80% or more, 90% or more, or 95% or more. The value of $\Delta Hin$ is not limited, but is preferably 5 to 8 J/g.

2. Production process

The polymer molded article is preferably produced by a production process including: a step 1 of preparing the surface layer portion; and a step 2 of subjecting a raw material of the base portion to thermoforming to thereby form the base portion, and thermally bonding the surface layer portion to a surface of the base portion.

(1) Step 1

This step will be described by taking the above-described preferred second aspect as an example. The production process and the multilayer sheet are disclosed in PCT/JP2021/041525. The contents of the document are incorporated herein by reference.

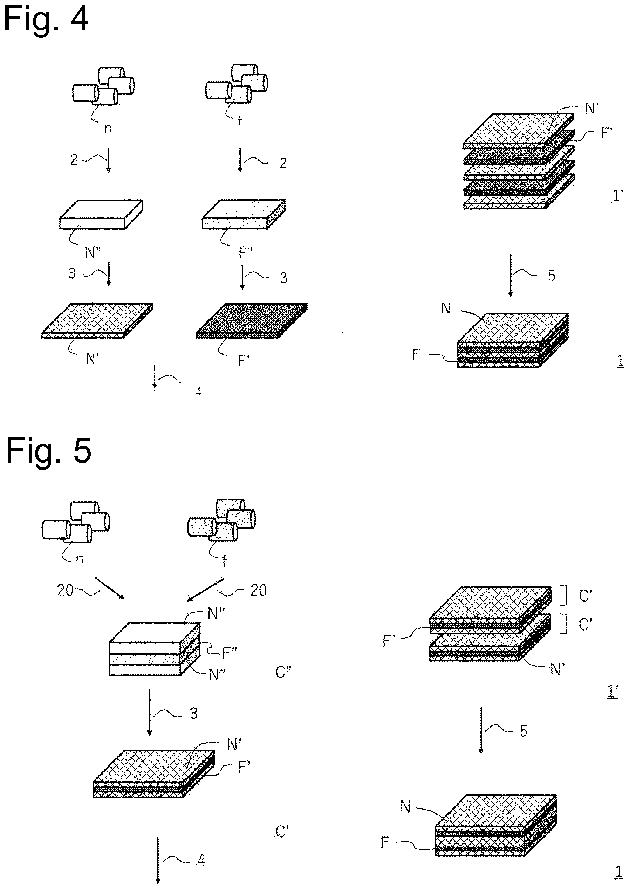

It is preferable to prepare a multilayer sheet including the filler layer F and the neat layer N as the surface layer portion. The multilayer sheet is preferably produced by a process including: a step i of preparing a precursor in which the filler layer F and the neat layer N are laminated such that the filler layers F are not adjacent to each other; and a step ii of bringing a heating element into contact with the outermost layers of the precursor to thermally fusion bond layers of the sheet. The melting point TmF of the filler layer F and the melting point TmN of the neat layer N satisfy the relationship TmF > TmN, and preferably satisfy the relationship TmF - TmN $\geq$ 1 (°C). The difference in melting point improves adhesion between layers. Hereinafter, respective steps will be described with reference to Figs. 4 and 5. In the drawing, the reference alphanumerics f and n denote resin compositions that finally constitute the layer F and the layer N. The reference alphanumerics F" and N" denote un-oriented sheets (original sheets) that finally constitute the layer F and the layer N. The reference alphanumerics F' and N' denote biaxially oriented sheet-like parts that finally constitute the layer F and the layer N. The reference alphanumeric 1' denotes a precursor, the reference alphanumeric 1 denotes a multilayer sheet, the reference alphanumeric F denotes a filler layer, and the reference alphanumeric N denotes a neat layer. In addition, the reference alphanumeric 2 denotes an un-oriented sheet preparation step, the reference alphanumeric 3 denotes a stretching step, the reference alphanumeric 4 denotes a lamination step, and the reference alphanumeric 5 denotes an interface fusion bonding step. The melting points Tmf and Tmn of the resin compositions, the melting points TmF" and TmN" of the un-oriented sheets, the melting points TmF' and TmN' of the biaxially oriented sheet-like parts, and the melting points TmF and TmN of the layers have the following relationships.

$$Tmf = TmF''$$

$$TmF' = TmF = Tmf + x \ (°C)$$

$$Tmn = TmN''$$

$$TmN' = TmN = Tmn + y \ (°C)$$

x and y vary depending on the oriented state or the like, but are each independently preferably 1 to 10°C, and more preferably approximately 2 to 7°C.

1) Step i

In this step, the precursor is prepared. Some of the layers constituting the precursor may be composed of the coextruded layer described above. All of the interfaces of the precursor are not fusion bonded, or some of the interfaces are fusion bonded.

This step can be performed, for example, by separately preparing a biaxially oriented polypropylene sheet-like part F' for the filler layer F and a biaxially oriented polypropylene sheet-like part N' for the neat layer N, and alternately laminating these parts. For example, the precursor 1' can be prepared by laminating N'/F'/N'/···/N'. In this case, all of the interfaces are preferably not fusion bonded.

One aspect of this step is illustrated in Fig. 4. In this aspect, the biaxially oriented polypropylene sheet-like parts F' and N' are separately prepared, and the biaxially oriented polypropylene sheet-like parts F' and N' are alternately laminated to prepare the precursor 1'. In this case, all of the interfaces are preferably not fusion bonded, but one or some of the interfaces may be fusion bonded. At least one of the outermost layers is preferably the biaxially oriented polypropylene sheet-like part N' from the viewpoint of enhancing thermal adhesiveness with the base portion of the resulting sheet.

The biaxially oriented polypropylene sheet-like part N' can be prepared by a known process. The biaxially oriented polypropylene sheet-like part N' can be obtained by, for example, preparing an original sheet (un-oriented polypropylene sheet-like part N") from a raw material resin composition n, and biaxially stretching the original sheet by a known process. The thickness of the original sheet is preferably more than 0.15 mm, and the upper limit thereof is not limited, but is preferably 6 mm or less from the viewpoint of ease of handling and the like. The temperature during biaxial stretching is not limited, but is preferably in a range of TmN" **-10°C** to TmN".

The biaxially oriented polypropylene sheet-like part F' can also be produced in the same manner as the biaxially oriented polypropylene sheet-like part N'. However, when the biaxially oriented polypropylene sheet-like part F' contains the inorganic filler, the biaxially oriented polypropylene sheet-like part F' contains the inorganic filler in an amount larger than the biaxially oriented polypropylene sheet-like part N'. Therefore, the temperature V during biaxial stretching is preferably set so as to satisfy the following relationship.

$$-3 \leq V - TmF'' \leq 3$$

TmF" is the melting point (°C) of the original sheet. The melting point Tmf of the resin composition is measured by DSC under the condition of a heating rate of 10°C/min from 30°C to 230°C, and the melting point TmF" can be determined from the relationship Tmf = TmF".

The thickness of the original sheet is preferably more than 0.15 mm, and the upper limit thereof is not limited, but is preferably 6 mm or less from the viewpoint of ease of handling and the like. The stretch ratio is preferably 4 to 8 times for one axis from the viewpoint of rigidity. The ratio for one axis and the ratio for the other axis may be the same or different. The two axes are preferably orthogonal.

This step is preferably performed using a coextruded sheet-like part having the layer F and the layer N. Use of such a coextruded sheet-like part allows the step ii to be omitted or simplified. An aspect of simplifying the step ii is illustrated in Fig. 5. Specifically, a coextruded biaxially oriented sheet-like part C' is prepared by coextruding a raw material of the layer F and a raw material of the layer N to prepare a coextruded original sheet C" having a plurality of layers, and biaxially stretching the coextruded original sheet C". The temperature V at the time of biaxially stretching the coextruded original sheet C" is preferably selected so as to satisfy the above-described relationship. Subsequently, the coextruded biaxially oriented sheet-like parts C', or the coextruded biaxially oriented sheet-like part C' and the above-described biaxially oriented sheet-like part F' or N' are laminated to prepare the precursor 1'. In this case, the total number of coextruded layers in the precursor 1' is not limited, but is preferably 2 to 6. The thickness of the coextruded biaxially oriented sheet-like part C' is preferably 0.01 to 0.50 mm, and more preferably 0.02 to 0.50 mm.

As illustrated in Fig. 5, a plurality of coextruded biaxially oriented sheet-like parts of C' are laminated to prepare a precursor, whereby the N layers at the center are fusion bonded to each other, and a five-layer multilayer sheet can be produced.

Precursor: C'[N/F/N]/C'[N/F/N]
Multilayer sheet: N/F/N/F/N

Each of the single-layer biaxially oriented sheet-like part and the coextruded biaxially oriented sheet-like part can be disposed in any direction. The orientation direction in-plane of the multilayer sheet can be adjusted depending on the disposition of the parts.

2) Step ii

In this step (reference alphanumeric 5 in Figs. 4 and 5), a heating element is brought into contact with the outermost layers of the precursor 1' of the multilayer sheet to thermally fusion bond the respective layers. The temperature T preferably satisfies a relationship of $Tmh \geq T \geq Tml$ ($TmF \geq T \geq TmN$), and more preferably satisfies a relationship of $Tmh \geq T \geq Tml + 10$ (°C) ($TmF \geq T \geq TmN + 10$ (°C)). When T exceeds the upper limit, the laminate is melted, and mechanical properties may be deteriorated. When T is less than the lower limit, the layers are not sufficiently fusion bonded, and mechanical properties may be deteriorated. The specific temperature of the heating element is preferably approximately 120 to 190°C, more preferably 140 to 170°C, and even more preferably 150 to 165°C. T can be measured by any method, but is preferably measured by using a non-contact type thermometer such as a radiation thermometer. The melting point is defined as the peak temperature of the melting curve obtained through measurement by DSC under the condition of a heating rate of 10°C/min from 30°C to 230°C.

Preferably, this step is successively performed using a heating roll as the heating element. Specifically, the layers are fusion bonded by passing the precursor of the multilayer sheet between two heated rolls. A heating roll including two or more pairs of rolls, each pair being composed of two rolls, is used as the heating element for fusion bonding. The pressure to be applied at that time is appropriately adjusted. The take-up speed in the roll forming is not limited, but is preferably approximately 0.05 to 10 m/min.

Examples of the process other than the roll forming include press-bond molding and fusion bond molding. In addition, in the thermally fusion bonding the sheet-like parts, a pressure is preferably applied in order to suppress thermal shrinkage and further promote orientation. The pressure at that time is appropriately adjusted according to the fusion bonding temperature.

3) Other steps

The production process of the present invention may further include a publicly known step such as cooling the multilayer sheet obtained in the preceding step. Nonlimiting examples of the cooling method include a method of cooling at room temperature or a method of cold-pressing at room temperature or at 10 to 20°C.

(2) Step 2

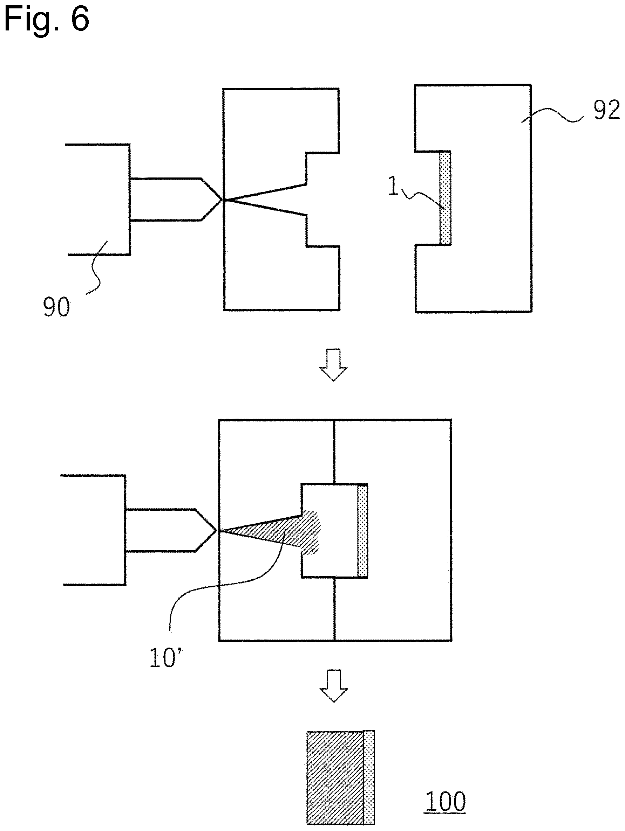

In this step, the base portion is formed by subjecting the raw material of the base portion to thermoforming, and the surface layer portion is thermally bonded to the surface of the base portion. The thermoforming includes, but is not limited to, injection molding, press molding, and vacuum forming. Among them, since injection molding is preferable, this step will be described below with reference to Fig. 6 using injection molding as an example.

In the drawing, the reference alphanumeric 90 denotes an injection molding machine, the reference alphanumeric 92 denotes a mold, the reference alphanumeric 1 denotes a multilayer sheet, and the reference alphanumeric 10' denotes a molten polymer forming the base portion. In this step, first, the multilayer sheet 1 is disposed in the cavity of the mold. Next, the mold is closed, a molten polymer constituting the base portion is injected into the mold, and the surface layer portion and the base portion are thermally bonded. The molding conditions are appropriately adjusted depending on the polymer to be used, and are appropriately adjusted so as to satisfy Tms < Tp, and as necessary, so as to satisfy the residual ratio R ($\Delta Hin/\Delta Hout$) $\geq 60\%$. When the polypropylene-based resin is used, as one aspect, the cylinder temperature of the molding machine can be approximately 180 to 250°C, and the mold temperature can be approximately 30 to 60°C. Tp is the temperature of the molten polymer for the base portion, which is discharged from the nozzle of the molding machine, and Tp can be 180 to 250°C. This molding method is also referred to as insert molding.

3. Application

The surface layer portion of the polymer molded article has a high degree of orientation in the in-plane direction and a specific higher-order structure as well as exhibits less dependency of the degree of orientation in the thickness direction, and thus has excellent mechanical properties, in particular, excellent rigidity and scratch resistance while being lightweight. When the surface layer portion includes the filler layer F, the filler layer F has easy peeling properties. Therefore, when the surface layer portion includes the top layer, the top layer can be easily peeled off from the polymer molded article, and thus excellent recyclability is also exhibited. Therefore, the polymer molded article has excellent recyclability and excellent rigidity and scratch resistance, and thus can be used for automobile parts, electrical/electronic parts, housing parts, and the like as a substitute for a steel sheet. In addition, the polymer molded article is useful as a food packaging material, a container, a lid, and the like which are thin and lightweight and have excellent unsealing properties. Further, the polymer molded article has high rigidity, and thus is useful as sundries, daily necessities, household electric appliance parts, toy parts, furniture parts, building parts, packaging components, industrial materials, distribution materials, agricultural materials, or the like.

The polymer molded article has the above-described rigidity. In addition, the polymer molded article has an in-plane impact strength (-30°C, JIS K7211-2) of preferably 5 J/mm or more, more preferably 7 J/mm or more, and even more preferably 9 J/mm or more when standardized with a thickness of 3 mm. In a scratch resistance test, a sample is scratched and evaluated based on the width of the scratch. In one aspect, the scratching conditions are as follows. Scratching speed: 100 min/m, load: 10 N, tip diameter: 1.0 mm, scratch length: 50 mm.

EXAMPLES

1. Preparation of biaxially oriented sheet-like part

A biaxially oriented sheet-like part was prepared as follows.

[Polymer 1]

A solid catalyst used for polymerization was prepared by the process described in Example 1 of EP 674991 B. The solid catalyst was a catalyst in which Ti and diisobutyl phthalate as an internal donner were supported on $MgCl_2$ by the process described in the above patent publication. The solid catalyst (1), triethylaluminium (TEAL), and dicyclopentyldimethoxysilane (DCPMS) were brought into contact at -5°C for 5 minutes in an amount such that the weight ratio of TEAL to the solid catalyst was 11 and the weight ratio of TEAL to DCPMS was 10. The obtained catalyst system was maintained in a liquid propylene in the form of suspension at 20°C for 5 minutes to carry out prepolymerization. The resulting prepolymerization product was introduced into a polymerization reactor, and hydrogen and propylene were fed to the reactor. Then, a polymer 1 was obtained as a propylene homopolymer by setting the polymerization temperature to 75°C and the hydrogen concentration to 0.15 mol%, and adjusting the pressure.

[Resin composition (e)] (talc-containing resin composition)

To 60 parts by weight of the polymer 1, 40 parts by weight of talc (Neotalc UNI05, available from Neolite Industries (volume average particle size measured by laser diffraction method: 5 $\mu$m), 0.2 parts by weight of an antioxidant (B225, available from BASF), and 0.05 parts by weight of a neutralizing agent (calcium stearate, available from Tannan Kagaku Kogyo Co. Ltd.) were blended, and the blend was mixed with stirring using a Henschel mixer for 1 minute. The mixture was melt-kneaded using a single-screw extruder (NVC $\varphi$50 mm, available from Nakatani Machinery Ltd.) at a cylinder temperature of 230°C, and the extruded strand was cooled in water, followed by cutting with a pelletizer to obtain a resin composition (e) in the form of pellet. The resin composition (e) had a MFR (temperature: 230°C, load: 2.16 kg) of 4.6 g/10 min.

[Polymer 2-1]

The solid catalyst (1), TEAL, and dicyclopentyldimethoxysilane (DCPMS) were brought into contact at -5°C for 5 minutes in an amount such that the weight ratio of TEAL to the solid catalyst was 11 and the weight ratio of TEAL to DCPMS was 3. The obtained catalyst system was maintained in a liquid propylene in the form of suspension at 20°C for 5 minutes to carry out prepolymerization. The obtained prepolymerization product was introduced into a polymerization reactor, and then hydrogen, propylene and ethylene were fed to the reactor. Then, a polymer 2-1 was obtained as a propylene-ethylene copolymer by setting the polymerization temperature to 75°C, the hydrogen concentration to 0.20 mol%, the ethylene concentration to 0.45 mol%, and adjusting the polymerization pressure.

[Resin composition (b1)]

To 100 parts by weight of the polymer 2-1, 0.2 parts by weight of an antioxidant (B225, available from BASF), 0.05 parts by weight of a neutralizing agent (calcium stearate, available from Tannan Kagaku Kogyo Co. Ltd.), and 0.25 parts by weight of a nonitol-based nucleating agent (Millad NX8000J, available from Milliken & Company) were blended, and the blend was mixed with stirring using a Henschel mixer for 1 minute. The mixture was melt-kneaded using a single-screw extruder (NVC φ50 mm, available from Nakatani Machinery Ltd.) at a cylinder temperature of 230°C, and the extruded strand was cooled in water, followed by cutting with a pelletizer to obtain a resin composition (b1) in the form of pellet. The resin composition (b1) contained 1.7 wt% of ethylene-derived unit, and had a MFR (temperature: 230°C, load: 2.16 kg) of 4.9 g/10 min.

[Polymer 2-2]

The solid catalyst (1), TEAL, and dicyclopentyldimethoxysilane (DCPMS) were brought into contact at -5°C for 5 minutes in an amount such that the weight ratio of TEAL to the solid catalyst was 11 and the weight ratio of TEAL to DCPMS was 3. The obtained catalyst system was maintained in a liquid propylene in the form of suspension at 20°C for 5 minutes to carry out prepolymerization. The obtained prepolymerization product was introduced into a polymerization reactor, and then hydrogen, propylene and ethylene were fed to the reactor. Then, a polymer 2-2 was obtained as a propylene-ethylene copolymer by setting the polymerization temperature to 75°C, the hydrogen concentration to 0.44 mol%, the ethylene concentration to 1.07 mol%, and adjusting the polymerization pressure.

[Resin composition (b2)]

To 100 parts by weight of the polymer 2-2, 0.2 parts by weight of an antioxidant (B225, available from BASF) and 0.05 parts by weight of a neutralizing agent (calcium stearate, available from Tannan Kagaku Kogyo Co. Ltd.) were blended, and the blend was mixed with stirring using a Henschel mixer for 1 minute. The mixture was melt-kneaded using a single-screw extruder (NVC φ50 mm, available from Nakatani Machinery Ltd.) at a cylinder temperature of 230°C, and the extruded strand was cooled in water, followed by cutting with a pelletizer to obtain a resin composition (b2) in the form of pellet. The resin composition (b2) contained 4.0 wt% of ethylene-derived unit, and had a MFR (temperature: 230°C, load: 2.16 kg) of 7.5 g/10 min.

[Polymer 3]

The solid catalyst (1), TEAL, and cyclohexyl methyl dimethoxysilane (CHMMS) were brought into contact at -5°C for 5 minutes in an amount such that the weight ratio of TEAL to the solid catalyst was 8 and the weight ratio of TEAL to CHMMS was 8. The obtained catalyst system was maintained in a liquid propylene in the form of suspension at 20°C for 5 minutes to carry out prepolymerization, and the resultant was used as a prepolymerization catalyst.

The obtained prepolymerization catalyst was introduced into a polymerization reactor, and then hydrogen, propylene and ethylene were fed to the reactor. Then, a polymer 3 was obtained as a propylene-ethylene copolymer by setting the polymerization temperature to 75°C, the hydrogen concentration to 0.068 mol%, the ethylene concentration to 0.08 mol%, and adjusting the polymerization pressure.

[Resin composition (a)]

To 100 parts by weight of the polymer 3, 0.2 parts by weight of B225 available from BASF, as an antioxidant, 0.05 parts by weight of calcium stearate available from Tannan Kagaku Kogyo Co. Ltd., as a neutralizing agent, and 0.05 parts by weight of a nonitol-based nucleating agent (Millad NX8000J, available from Milliken & Company) were blended, and the blend was mixed with stirring using a Henschel mixer for 1 minute. The mixture was melt-kneaded using an NVC extruder (available from Nakatani Machinery Ltd.) at a cylinder temperature of 230°C, and the extruded strand was cooled in water, followed by cutting with a pelletizer to obtain a resin composition (a) in the form of pellet. The resin composition (a) contained 0.36 wt% of ethylene-derived unit, and had a MFR (temperature: 230°C, load: 2.16 kg) of 4.4 g/10 min.

[Biaxially oriented sheet LHL100]

Using a three-type three-layer film/sheet forming machine (25 mm φ, available from TPIC Co., Ltd.), coextrusion was performed at an extruding temperature of 230°C so as to form a structure of resin composition (b1)/resin composition (a)/resin composition (b1), and thus, an original sheet having a thickness of 3.8 mm (size: 10 cm × 10 cm or more) was obtained. The original sheet was subjected to sequential biaxial stretching (5 times × 8 times) at 165°C using a film stretching apparatus (KARO-IV, available from Bruckner) to obtain a coextruded biaxially oriented sheet LHL100 having a thickness of 0.1 mm. The thickness ratio was 1/20/1. The rigidity and melting points Tmh (TmF), Tml (TmN), and Tms of the sheet were measured. The same applies to the following sheets.

[Biaxially oriented sheet LHL30]

A coextruded biaxially oriented sheet LHL30 having a thickness of 0.03 mm was obtained in the same manner as the biaxially oriented sheet LHL100 except that the resin composition (b2) was used instead of the resin composition (b1). The ratio of sequential biaxial stretching was set to 5 times × 8 times. The thickness ratio was 1/10/1.

[Biaxially oriented sheet LHL50]

A coextruded biaxially oriented sheet LHL50 having a thickness of 0.05 mm was obtained in the same manner as the biaxially oriented sheet LHL100. The ratio of sequential biaxial stretching was set to 5 times × 8 times. The thickness ratio was 1/18/1.

[Biaxially oriented sheet LHL200]

Using a three-type three-layer film/sheet forming machine (25 mm φ, available from TPIC Co., Ltd.), coextrusion was performed at an extruding temperature of 230°C so as to form a structure of resin composition (b2)/resin composition (a)/resin composition (b2), and thus, an original sheet having a thickness of 2.0 mm (size: 10 cm × 10 cm or more) was obtained. The original sheet was subjected to simultaneous biaxial stretching (3 times × 3 times) at 165°C using a film stretching apparatus (KARO-IV, available from Bruckner) to obtain a coextruded biaxially oriented sheet LHL200 having a thickness of 0.2 mm. The thickness ratio was 1/18/1.

[Biaxially oriented sheet NFN150] (biaxially oriented sheet having talc-containing layer)

Using a three-type three-layer film/sheet forming machine (25 mm φ, available from TPIC Co., Ltd.), coextrusion was performed at an extruding temperature of 230°C so as to form a structure of resin composition (b2)/resin composition (e)/resin composition (b2), and thus, an original sheet having a thickness of 1.5 mm (size: 10 cm × 10 cm or more) was obtained. The original sheet was subjected to simultaneous biaxial stretching (3 times × 3 times) at 165°C using a film stretching apparatus (KARO-IV, available from Bruckner) to obtain a coextruded biaxially oriented sheet NFN150 having a thickness of 0.15 mm. The thickness ratio was 1/18/1.

[Un-oriented sheet NFN_U] (un-oriented sheet having talc-containing layer)

Using a three-type three-layer film/sheet forming machine (25 mm φ, available from TPIC Co., Ltd.), coextrusion was performed at an extruding temperature of 230°C so as to form a structure of resin composition (b2)/resin composition (e)/resin composition (b2), and thus, a sheet having a thickness of 0.4 mm (size: 10 cm × 10 cm or more) was obtained, and this was used as an un-oriented sheet NFN_U. The thickness ratio was 1/10/1.

[Un-oriented sheet LHL_U]

Using a three-type three-layer film/sheet forming machine (25 mm φ, available from TPIC Co., Ltd.), coextrusion was performed at an extruding temperature of 230°C so as to form a structure of resin composition (b1)/resin composition (a)/resin composition (b1), and thus, a sheet having a thickness of 0.4 mm (size: 10 cm × 10 cm or more) was obtained, and this was used as an un-oriented sheet LHL_U. The thickness ratio was 1/10/1.

[Example 1]

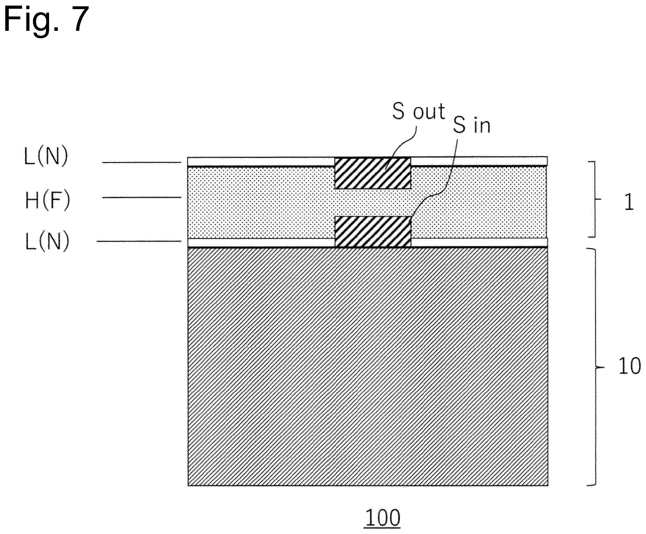

A mold having a cavity of 150 mm × 300 mm × 2.5 mm in thickness and a film gate was attached to an EC160N II injection molding machine available from Toshiba Machine Co., Ltd. The mold temperature was set to 40°C, and the biaxially oriented sheet LHL100 was disposed on one inner surface (150 mm × 300 mm) of the cavity. Then, polypropylene (YC582P, available from SunAllomer Ltd.) was injected into the cavity to perform insert molding. A polymer molded article including a base portion and a surface layer portion (biaxially oriented sheet LHL100) thermally bonded onto the base portion was thus produced. The molded article was evaluated as shown in Table 1. Tp (resin temperature during the thermally bonding) was 210°C. As illustrated in Fig. 7, a cross section of the molded article was cut after thermally bonding, and a section Sin about 30% thickness from an interface between YC582P and the surface layer portion toward the surface was obtained. In addition, a section Sout about 30% thickness from the surface of the surface layer portion toward the interface was obtained. These sections were subjected to DSC analysis, and the residual ratio R was measured by the method described later. The residual ratio R was 95%.

The molding conditions were as follows.

    Cylinder temperature: 180 to 240°C
    Mold temperature: 40°C
    Injection time: 15 seconds
    Cooling time: 25 seconds

[Example 2]

A polymer molded article was produced and evaluated in the same manner as in Example 1 except that the biaxially oriented sheet LHL30 was used instead of the biaxially oriented sheet LHL100, the thickness of the mold cavity was changed to 3 mm, and the resin temperature was changed as shown in Table 1.

[Example 3]

A polymer molded article was produced and evaluated in the same manner as in Example 1 except that the biaxially oriented sheet LHL30 was used instead of the biaxially oriented sheet LHL100 and the thickness of the mold cavity was changed to 3 mm.

[Example 4]

A polymer molded article was produced and evaluated in the same manner as in Example 3 except that the resin temperature was changed as shown in Table 1.

[Example 5]

A polymer molded article was produced and evaluated in the same manner as in Example 3 except that the biaxially oriented sheet LHL50 was used instead of the biaxially oriented sheet LHL30.

[Examples 6 and 7]

Two biaxially oriented sheets of LHL50 and three biaxially oriented sheets of LHL50 were respectively stacked to prepare two precursors. Using a press molding machine available from SHOJI Co., Ltd., which was heated to 160°C as a heating element, the respective layers of the precursors were thermally fusion bonded to produce multilayer sheets as laminates. At the time of pressing, each of the precursors was inserted into the press molding machine after both sides of the precursor were sandwiched between an aluminum plate having a thickness of 3 mm and a steel sheet having a thickness of 1 mm from the outside, and pressurized at 4 MPa for 2 minutes. A multilayer sheet having a thickness of 0.1 mm and a multilayer sheet having a thickness of 0.15 mm were thus produced and evaluated. Polymer molded articles were produced and evaluated in the same manner as in Example 3 using the multilayer sheets instead of the biaxially oriented sheet LHL30.

[Examples 8 and 9]

Polymer molded articles were produced and evaluated in the same manner as in Examples 5 and 6 except that the biaxially oriented sheet LHL200 was used instead of the biaxially oriented sheet LHL50.

[Example 10]

A polymer molded article was produced and evaluated in the same manner as in Example 3 except that the biaxially oriented sheet NFN150 was used instead of the biaxially oriented sheet LHL30.

[Example 11]

Nineteen LHL50 were stacked, and NFN150 was further stacked on the top layer to prepare a precursor. Using a press molding machine available from SHOJI Co., Ltd., which was heated to 160°C as a heating element, the layers of the precursor were thermally fusion bonded to produce a multilayer sheet as a laminate. At the time of pressing, the precursor was inserted into the press molding machine after both sides of the precursor were sandwiched between an aluminum plate having a thickness of 3 mm and a steel sheet having a thickness of 1 mm from the outside, and pressurized at 4 MPa for 2 minutes. A multilayer sheet having a thickness of 1.1 mm was thus produced. A polymer molded article was produced and evaluated in the same manner as in Example 3 except that the multilayer sheet obtained as described above was disposed instead of the biaxially oriented sheet LHL30 so that the top layer faced the inner surface of the cavity of the mold.

[Example 12]

A polymer molded article was produced and evaluated in the same manner as in Example 3 except that the resin temperature was changed as shown in Table 1.

[Comparative Example 1]

A molded article was obtained by injection molding without using a multilayer sheet and evaluated. The molding conditions were the same as in Example 3.

[Comparative Example 2]

A polymer molded article was produced and evaluated in the same manner as in Example 3 except for using the un-oriented sheet NFN_U.

[Comparative Example 3]

A polymer molded article was produced and evaluated in the same manner as in Example 3 except for using the un-oriented sheet LHL_U.

[Table 1-1]

| | | | | Example 1 | Example 2 | Example 3 | Example 4 | Example 5 | Example 6 | Example 7 | Example 11 |
|---|---|---|---|---|---|---|---|---|---|---|---|
| Surface layer portion | Top layer | | | - | | - | | - | - | - | NFN150 |
| | Used sheet | | | LHL100 | LHL30 | | | LHL50 | | | |
| | L (N) layer resin composition | | | b1 | b2 | b2 | b2 | b1 | b1 | b1 | b1, b2 |
| | H (F) layer resin composition | | | a | a | a | a | a | a | a | a,e |
| | Number of laminated films | | | 1 | 1 | 1 | 1 | 1 | 2 | 3 | 1 + 19 |
| | Surface layer portion thickness | mm | | 0.1 | 0.03 | 0.03 | 0.03 | 0.05 | 0.1 | 0.15 | 1.1 |
| | Film tensile modulus MD | MPa | | 2260 | 2230 | 2230 | 2230 | 2400 | 2400 | 2400 | 2400 |
| | Film tensile modulus TD | MPa | | 4670 | 5400 | 5400 | 5400 | 4620 | 4620 | 4620 | 4620 |
| | Tmh (TmF) | °C | | 168 | 168 | 168 | 168 | 168 | 168 | 168 | 168, 171 |
| | Tml (TmN) | °C | | 159 | 140 | 140 | 140 | 159 | 159 | 159 | 159, 140 |
| | Tms | °C | | 165 | 165 | 165 | 165 | 165 | 165 | 165 | 165 |
| Thermally bonding conditions | Resin temperature (Tp) | | | 210 | 180 | 210 | 240 | 210 | 210 | 210 | 210 |
| | Injected resin | | | YC582P | YC582P | YC582P | YC582P | YC582P | YC582P | YC582P | YC582P |
| | Residual ratio R | % | | 95 | 94 | 94 | 90 | 95 | 96 | 96 | 97 |
| | Insert molded article thickness | mmt | | 2.5 | 3 | 3 | 3 | 3 | 3 | 3 | 3 |
| Molded article | Rigidity | Flexural modulus MD | MPa | 2,130 | 1,790 | 1,810 | 1,830 | 1,910 | 2,015 | 2,020 | 2,347 |
| | | Flexural modulus TD | MPa | 1,690 | 1,480 | 1,475 | 1,460 | 1,420 | 1,560 | 1,850 | 1,610 |
| | Impact strength @-30°C | Fracture type | | YU | YU | YU | YU | YU | YU | YU | YU |
| | | Maximum impact force energy | J | 18 | 20 | 20 | 13 | 25 | 20 | 29 | 43 |
| | | Puncture energy | J | 23 | 29 | 27 | 18 | 32 | 26 | 36 | 60 |
| | | Puncture energy* | J/mm | 9.2 | 9.5 | 8.9 | 5.9 | 10.6 | 8.7 | 12.0 | 20.0 |
| | | Total energy | J | 25 | 30 | 29 | 20 | 24 | 27 | 37 | 63 |
| | Scratch width | Load 10 N | $\mu$m | 419 | 450 | 437 | 431 | 390 | 419 | 390 | 307 |

* Standardized with the thickness of the molded article

[Table 1-2]

| | | | Example 8 | Example 9 | Example 10 | Example 12 | Comparative Example 1 | Comparative Example 2 | Comparative Example 3 |
|---|---|---|---|---|---|---|---|---|---|
| Surface layer portion | Top layer | | - | - | - | - | - | - | - |
| | Used sheet | | LHL200 | | NFN150 | LHL30 | - | NFN_U | LHL_U |
| | L (N) layer resin composition | | b2 | b2 | b2 | b2 | | b2 | b1 |
| | H (F) layer resin composition | | a | a | e | a | | e | a |
| | Number of laminated films | | 1 | 2 | 1 | 1 | - | 1 | 1 |
| | Surface layer portion thickness | mm | 0.2 | 0.4 | 0.15 | 0.03 | - | 0.4 | 0.4 |
| | Film tensile modulus MD | MPa | 2320 | 2320 | 2990 | 2230 | - | 1220 | 950 |
| | Film tensile modulus TD | MPa | 2400 | 2400 | 2980 | 5400 | - | 1170 | 910 |
| | Tmh(TmF) | °C | 168 | 168 | 171 | 168 | - | 164 | 162 |
| | Tml(TmN) | °C | 140 | 140 | 140 | 140 | - | 138 | 156 |
| | Tms | °C | 168 | 168 | 171 | 165 | - | 163 | 162 |
| Thermally bonding conditions | Resin temperature (Tp) | | 210 | 210 | 210 | 280 | 210 | 210 | 210 |
| | Injected resin | | YC582P | YC582P | YC582P | YC582P | YC582P | YC582P | YC582P |
| | Residual ratio R | % | 95 | 96 | 98 | 60 | - | - | - |
| | Insert molded article thickness | mmt | 3 | 3 | 3 | 3 | 3 | 3 | 3 |
| Molded article | Rigidity — Flexural modulus MD | MPa | 2,110 | 2075 | 2110 | 1,790 | 1,970 | 1,640 | 1,640 |
| | Rigidity — Flexural modulus TD | MPa | 1,680 | 1,860 | 1,690 | 1,380 | 1,605 | 1,310 | 1,310 |
| | Impact strength @-30°C — Fracture type | | YU | YU | YU | NY | YU | NY | NY |
| | Impact strength @-30°C — Maximum impact force energy | J | 26 | 29 | 23 | 8 | 20 | 6 | 5 |
| | Impact strength @-30°C — Puncture energy | J | 33 | 35 | 29 | 12 | 26 | 8 | 7 |
| | Impact strength @-30°C — Puncture energy* | J/mm | 10.9 | 11.8 | 9.6 | 4.0 | 8.8 | 2.7 | 2.3 |
| | Impact strength @-30°C — Total energy | J | 35 | 37 | 29 | 14 | 27 | 9 | 7 |
| | Scratch width — Load 10 N | $\mu$m | 405 | 290 | 508 | 428 | 655 | 551 | 490 |

* Standardized with the thickness of the molded article

Each evaluation was performed as follows.

[MFR of resin composition]

The MFR was measured under the conditions of a temperature of 230°C and a load of 2.16 kg in accordance with JIS K7210-1.

[Ethylene-derived unit content (wt%) in resin composition]

A spectrum of $^{13}$C-NMR for the sample dissolved in a mixed solvent of 1,2,4-trichlorobenzene and deuterated benzene was obtained using AVANCE III HD400, available from Bruker ($^{13}$C resonance frequency: 100 MHz) under the conditions of measurement temperature: 120°C, flip angle: 45 degrees, pulse interval: 7 seconds, sample rotating speed: 20 Hz, and number of scans: 5,000 times. The ethylene-derived unit content (wt%) in the resin composition was determined using the obtained spectrum by the method described in the literature of M. Kakugo, Y. Naito, K. Mizunuma and T. Miytake, Macromolecules, 15, p. 1150 to 1152 (1982).

[Scratch resistance]

A scratch tester KK-02 available from KATO TECH Co., Ltd. was used as an apparatus, and the surface of the surface layer portion of the molded article was scratched. The width of the scratch was measured with a shape measuring instrument laser microscope ("VHX-2000" available from KEYENCE Corporation), and the measured value was used as an index for scratch resistance. The smaller the width, the better the scratch resistance.
Scratching speed: 100 min/m, load: 10 N, tip diameter: 1.0 mm, scratch length: 50 mm

[Flexural modulus]

Each of the polymer molded articles having the thicknesses shown in Table 1 was processed into a size of 10 mm in width and 80 mm in length to obtain a test piece for measurement (type B2). Using a precision universal testing machine (autograph AG-X 10 kN) available from Shimadzu Corporation, the flexural modulus of the type B2 test piece for measurement was measured under the conditions of a temperature of 23°C, a relative humidity of 50%, a span of 48 mm, and a test speed of 2 mm/min. The measurement was performed by applying an indenter from the surface layer side.

[Tensile modulus]

In accordance with JIS K7161, a specimen cut out from a film sample was stretched at a tensile speed of 5 mm/min with Tensilon (AUTO COM series) available from T. S. E., Co., Ltd., and a value obtained by dividing a load at 2% elongation of a tangent drawn from the zero point to a stress-strain curve by a cross-sectional area of the specimen was defined as a tensile modulus. The tensile modulus of the film sample was measured in each of the MD direction and the TD direction.

[Impact strength]

The polymer molded article was processed into a square having $70 \pm 2$ mm sides to obtain a test piece for measurement. Various energies (J) and fracture behavior were determined in accordance with JIS K7211-2 using Hydroshot HITS-P10, available from Shimadzu Corporation. In a chamber adjusted to -30°C, a test piece for measurement was placed on a support base having a hole with an inner diameter of 40 mmφ and secured with a sample holder having an inner diameter of $40 \pm 2$ mmφ. Then, the test piece was struck with a striker having a diameter of $20.0 \pm 0.2$ mmφ and having a hemispherical striking surface at an impact velocity of $4.4 \pm 0.2$ m/sec. The average value of the puncture energies of four test pieces for measurement was taken as the impact strength.
The impact fracture behavior (fracture type) was determined based on the fracture types of YD/YS/YU/NY in accordance with JIS K7211-2 using the test pieces used for the measurement of the impact strength under the above conditions.

Maximum impact force energy: energy (J) spent to a displacement at the maximum impact force $F_M$ during the test
Puncture energy: energy (J) spent to a displacement at which the maximum impact force $F_M$ was reduced by half
Total energy: energy (J) spent from the start of the test to a displacement at which the impact force reaches zero

[Melting point] melting point measured by DSC (Tms, Tmh, Tml)

Approximately 5 mg of a sample was taken and weighed with an electronic balance. Thereafter, the sample was maintained at 30°C for 5 minutes and then heated to 230°C at a heating rate of 10°C/min by a differential scanning calorimeter (DSC) (Q-200, available from TA Instruments) to obtain a melting curve. The peak temperature of the melting curve was taken as the melting point. When the heat of fusion ΔH was determined using the melting curve, the heat of fusion ΔH was calculated from the area of the melting peak in a predetermined temperature range on the baseline after the melting was completely finished in the melting profile after the baseline correction.

Melting point (Tms) of surface layer portion at joint portion between surface layer portion and base portion

1) A portion 10 to 50% thickness from an interface between the surface layer portion and the base portion was collected.
2) The sample collected in the above 1) was subjected to DSC measurement under a heating condition, and the peak temperature of the obtained melting curve was defined as Tms. In a case where a plurality of melting point peaks were observed, such as a case where Tmh and Tml were simultaneously observed, the temperature of the maximum peak (usually Tmh) was defined as Tms.

Residual ratio R (ΔHin/ΔHout)

1) A portion 10 to 50% thickness from a surface of the surface layer portion on a side opposite to the base portion was collected.
2) The sample collected in the above 1) was subjected to DSC analysis under a heating condition, and the heat content (J/g) in the range of Tmh ± 5°C was obtained as ΔHout. The peak top temperature in the melting profile was defined as the melting point.
3) A portion 10 to 50% thickness from an interface between the surface layer portion and the base portion was collected.
4) The sample collected in the above 3) was subjected to DSC analysis under the above heating condition, and the heat content (J/g) in the range of Tmh ± 5°C was obtained as ΔHin.

REFERENCE SIGNS LIST

1 Surface layer portion, multilayer sheet
1' Precursor
10 Base portion
10' Molten polymer
90 Injection molding machine
92 Mold
100 Polymer molded article
F Filler layer F
N Neat layer N
H Biaxially oriented sheet layer H
L Biaxially oriented sheet layer L
T Top layer
C Coextruded layer
t Coextruded layer thickness
2 Un-oriented sheet preparation step
20 Un-oriented sheet preparation step (coextrusion)
3 Stretching step
4 Lamination step
5 Interface fusion bonding step
f, n Resin composition

F", N" Un-oriented sheet (original sheet)
F', N' Biaxially oriented sheet-like part
C" Coextruded original sheet
C' Coextruded biaxially oriented sheet-like part
Sin Section collected from interface of surface layer portion toward surface (about 30% of thickness of surface layer portion)
Sout Section collected from surface of surface layer portion toward interface (about 30% of thickness of surface layer portion)

## Claims

1. A polymer molded article comprising:

   a base portion; and
   a surface layer portion thermally bonded onto the base portion, wherein
   the polymer molded article satisfies the following requirements:

   1)

   $$Gs > Gb$$

   where Gs is a rigidity of the surface layer portion, and Gb is a rigidity of the base portion; and
   2)

   $$Tms < Tp$$

   where Tms is a melting point of the surface layer portion at a joint portion with the base portion, and Tp is a molding temperature during the thermally bonding.

2. The molded article according to claim 1, wherein the base portion and the surface layer portion are formed of a polymer having the same repeating unit.

3. The molded article according to claim 1 or 2, wherein the surface layer portion has a multilayer structure.

4. The molded article according to claim 3, wherein

   the surface layer portion has a multilayer structure including a biaxially oriented sheet layer L having a melting point Tml and a biaxially oriented sheet layer H having a melting point Tmh,

   $$Tmh > Tml,$$

   and
   the biaxially oriented sheet layer L forms the joint surface.

5. The molded article according to claim 4, wherein

   the biaxially oriented sheet layer H is formed of
   a polypropylene-based resin (A), or
   a resin composition containing the polypropylene-based resin (A) and a plate-like inorganic filler (B), in which a weight ratio of a component (B)/[a component (A) + the component (B)] is more than 0 wt% and 60 wt% or less.

6. The molded article according to claim 5, wherein

   the polypropylene-based resin (A) contains a polypropylene-based resin consisting of a component (A1) and an optional component (A2),

the component (A1) is 100 to 50 wt% of a propylene (co)polymer containing 0 to 10 wt% of a comonomer-derived unit selected from C2 to C10 $\alpha$-olefins (excluding C3 $\alpha$-olefins),
the optional component (A2) is 0 to 50 wt% of an ethylene-$\alpha$-olefin copolymer containing 10 to 90 wt% of an ethylene-derived unit, and
the polypropylene-based resin (A) has MFR (230°C, load 2.16 kg) of 1 to 15 g/10 min.

7. The molded article according to claim 4, wherein the surface layer portion includes a top layer other than the biaxially oriented sheet layer L and the biaxially oriented sheet layer H on an outermost surface of the surface layer portion.

8. The molded article according to claim 4, wherein a total thickness of the biaxially oriented sheet layer L/a thickness of the surface layer portion is 1 to 50%.

9. The molded article according to claim 4, wherein the surface layer portion has an alternating layer including the biaxially oriented sheet layer L and the biaxially oriented sheet layer H alternately laminated.

10. The molded article according to claim 1 or 2, wherein the surface layer portion has a thickness of 30 $\mu$m or more.

11. The molded article according to claim 1 or 2, wherein the base portion has a thickness of 5 to 250 times a thickness of the surface layer portion.

12. A process for producing the molded article according to claim 1 or 2, comprising:

a step 1 of preparing the surface layer portion; and
a step 2 of subjecting a raw material of the base portion to thermoforming to thereby form the base portion, and thermally bonding the surface layer portion to a surface of the base portion.

13. The process according to claim 12, wherein
the step 2 includes:

a step of disposing the surface layer portion in a cavity of a mold; and
a step of subjecting a raw material of the base portion to injection molding in the cavity to thereby form the base portion, and thermally bonding the surface layer portion to a surface of the base portion.

Fig. 1

100

Fig. 2

100

# Fig. 3A

N

F

1'

N

F

1

# Fig. 3B

C[N/F]
C[N/F/N]

C[F/N]

1'

C[N/F]
C[N/F/N]

t

F
N

1

# Fig. 4

# Fig. 5

Fig. 6

# Fig. 7

S out   S in

L(N)

H(F)                                                    1

L(N)

10

100

<table>
<tr><td colspan="2" align="center"><b>INTERNATIONAL SEARCH REPORT</b></td><td colspan="2">International application No.<br><br><b>PCT/JP2023/015876</b></td></tr>
</table>

**A.    CLASSIFICATION OF SUBJECT MATTER**

*B32B 27/00*(2006.01)i; *B29C 45/14*(2006.01)i; *B32B 27/32*(2006.01)i
FI:    B32B27/00 Z; B32B27/32 E; B29C45/14

According to International Patent Classification (IPC) or to both national classification and IPC

**B.    FIELDS SEARCHED**

Minimum documentation searched (classification system followed by classification symbols)

B32B27/00; B29C45/14; B32B27/32

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2015-163479 A (DAINIPPON PRINTING CO., LTD.) 10 September 2015 (2015-09-10) <br> claims, paragraphs [0002], [0012], [0094]-[0099] | 1-3, 10-13 |
| Y | | 4-9 |
| X | JP 55-79139 A (NIPPON PAINT CO., LTD.) 14 June 1980 (1980-06-14) <br> page 3, upper left column, line 4 to last line | 1, 12 |
| Y | JP 2013-103369 A (SEKISUI CHEM. CO., LTD.) 30 May 2013 (2013-05-30) <br> claims, paragraphs [0003]-[0005], [0009], [0030], [0046], [0052], [0079], [0080] | 4-9 |
| Y | JP 2017-45567 A (TOYOTA MOTOR CORP.) 02 March 2017 (2017-03-02) <br> paragraph [0042] | 4-9 |
| A | JP 2021-91115 A (SUNALLOMER LTD.) 17 June 2021 (2021-06-17) <br> claims | 1-13 |

☐ Further documents are listed in the continuation of Box C.          ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **06 June 2023** | **20 June 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

<table>
<tr><td colspan="2" align="center">INTERNATIONAL SEARCH REPORT<br>**Information on patent family members**</td><td>International application No.<br><br>**PCT/JP2023/015876**</td></tr>
</table>

| Patent document<br>cited in search report | Publication date<br>(day/month/year) | Patent family member(s) | Publication date<br>(day/month/year) |
|---|---|---|---|
| JP 2015-163479 A | 10 September 2015 | (Family: none) | |
| JP 55-79139 A | 14 June 1980 | (Family: none) | |
| JP 2013-103369 A | 30 May 2013 | (Family: none) | |
| JP 2017-45567 A | 02 March 2017 | (Family: none) | |
| JP 2021-91115 A | 17 June 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3514867 B
- JP 6943044 B
- JP 6969176 B
- JP 2014124940 A
- WO 2020075755 A
- JP 2021041525 W
- EP 674991 B

**Non-patent literature cited in the description**

- **M. KAKUGO** ; **Y. NAITO** ; **K. MIZUNUMA** ; **T. MIYTAKE**. *Macromolecules*, 1982, vol. 15, 1150-1152